**Europäisches Patentamt**

**European Patent Office**

**Office européen des brevets**

(11) Veröffentlichungsnummer: **0 251 129**
**A2**

# EUROPÄISCHE PATENTANMELDUNG

(21) Anmeldenummer: **87108965.2**

(22) Anmeldetag: **23.06.87**

(51) Int. Cl.⁴: **H02G 1/08** , G02B 6/44

(30) Priorität: **27.06.86 DE 3621617**

(43) Veröffentlichungstag der Anmeldung:
**07.01.88 Patentblatt 88/01**

(84) Benannte Vertragsstaaten:
**AT BE CH DE ES FR GB GR IT LI LU NL SE**

(71) Anmelder: **Kabelverlegetechnik Otto GmbH
Wiesenstrasse 16
D-2722 Visselhövede(DE)**

(72) Erfinder: **Otto, Dieter
Am Bramberg 17
D-2061 Seth(DE)**

(74) Vertreter: **Dipl.-Ing. H. Hauck Dipl.-Phys. W.
Schmitz Dipl.-Ing. E. Graalfs Dipl.-Ing. W.
Wehnert Dr.-Ing. W. Döring
Neuer Wall 41
D-2000 Hamburg 36(DE)**

(54) **Verfahren und Vorrichtung zum Einziehen von Kabel, insbesondere von Glasfaserkabel in ein Rohr.**

(57) Verfahren zum Einziehen von Kabel, insbesondere Glasfaserkabel in ein Rohr, bei dem auf den Anfang des Kabels eine Zugkraft aufgebracht wird, wobei der Kabelanfang mit einem mit dem Rohr zusammenwirkenden Kolben verbunden und mittels in das Rohr eingeführter Druckluft durch das Rohr getrieben wird.

FIG.1

EP 0 251 129 A2

## Verfahren und Vorrichtung zum Einziehen von Kabel, insbesondere von Glasfaserkabel in ein Rohr

Die Erfindung bezieht sich auf ein Verfahren zum Einziehen von Kabel, insbesondere Glasfaserkabel in ein Rohr, bei dem auf den Anfang des Kabels eine Zugkraft aufgebracht wird.

Bei herkömmlichen Verfahren werden Kabel mit Hilfe von Seilwinden durch Rohre gezogen. Zu diesem Zweck wird vom Ende des Rohres das Einzugseil zum Rohranfang vorgeschoben. Die überbrückbare Rohrlänge ist verhältnismäßig begrenzt. Im Verbindungsbereich zwischen Einziehseil und Kabelanfang ist ein Zugkraftmeßgerät angeordnet. Die Zugkraftwerte werden über ein Signalkabel, das mit dem Einzugsseil verbunden ist, zur Einziehwinde übertragen. Im Bereich der Einziehwinde wird die Zugkraft ständig überwacht. Vor allem beim Einziehen von Glasfaserkabel dürfen entsprechende Grenzwerte nicht überschritten werden. Wird die gemessene Zugkraft zu hoch, wird die Einziehwinde gestoppt oder mit geringerer Geschwindigkeit getrieben.

Der Erfindung liegt die Aufgabe zugrunde, ein Verfahren zum Einziehen von Kabel, insbesondere Glasfaserkabel, in ein Rohr anzugeben, mit dem das Kabel schnell und schonend eingezogen wird und das eine Überbrückung großer Rohrlängen gestattet.

Diese Aufgabe wird erfindungsgemäß dadurch gelöst, daß der Kabelanfang mit einem mit dem Rohr zusammenwirkenden Kolben verbunden und mittels in das Rohr eingeführter Druckluft durch das Rohr getrieben wird.

Beim erfindungsgemäßen Verfahren entfällt die Kabeleinziehwinde und damit das Aufwand und Zeit erfordernde Einführen des Einzugseils in das Rohr. Beim erfindungsgemäßen Verfahren wird das vordere Ende des Kabels mit einem Kolben verbunden, der mittels Druckluft durch das Rohr hindurchgetrieben wird und das Kabel mit sich zieht. Die mittels Druckluft aufgebrachte Zugkraft vermeidet abrupte Übergänge, welche beim Einsetzen einer Kabeleinziehwinde zum Reißen des Kabels führen können. Mit Hilfe des erfindungsgemäßen Verfahrens können sehr große Rohrlängen von 2000 m und mehr überwunden werden. Dadurch wird der Gesamtverlegeaufwand gegenüber herkömmlichen Verfahren stark herabgesetzt. Insbesondere der Aufwand für die Zugkraftmessung wird erheblich verringert. Bei der Verlegung von Glasfaserkabel wird eine Zugkraftmessung am Kabelanfang vorgeschrieben. Die hierzu verwendeten Methoden sind zeitraubend, aufwendig und störungsanfällig. Beim erfindungsgemäßen Verfahren ist der im Rohr herrschende Druck proportional der am Kabelanfang wirkenden Zugkraft.

Eine Vorrichtung zur Durchführung des erfindungsgemäßen Verfahrens ist gekennzeichnet durch eine Anschlußvorrichtung, die mit einem Ende des Rohrs verbindbar ist und eine luftdichte Durchführung für das Kabel koaxial zum Rohr sowie einen Druckluftanschluß aufweist und durch einen in das Rohr einführbaren, mit diesem dichtend zusammenwirkenden Kolben, der mit einem mit dem Kabel verbindbaren Ziehgerät versehen ist.

Bei der erfindungsgemäßen Vorrichtung ist die Anschluß vorrichtung vorzugsweise lösbar mit einem Rohranfang verbindbar. Das vordere Ende des Kabels wird zunächst durch die Durchführung in die Anschlußvorrichtung eingeführt. Anschließend wird die Anschlußvorrichtung dichtend mit dem Rohr verbunden. Zuvor erfolgt die Verbindung des Kabelanfangs mit dem Ziehgerät, wobei sich der Kolben bereits dichtend im Rohr befindet. Wird anschließend über den Druckluftanschluß Druckluft aufgebracht, wird der Kolben und damit das Kabel durch das Rohr bis zum Ende getrieben. Um auf einfache Weise einen schnellen und dichten Verschluß am Rohr zu erhalten, sieht eine Ausgestaltung der Erfindung vor, daß die Anschlußvorrichtung pistolenartig geformt ist und am vorderen zylindrischen Ende in ein hülsenartiges Anschlußstück einschiebbar ist, das seinerseits fest mit dem Rohr verbindbar ist.

Der Kolben zum Durchschießen des Kabels ist so auszuführen, daß er möglichst wenig Undichtigkeiten mit der Rohrwandung zuläßt. Andererseits muß der Kolben ausreichend flexibel sein, da sich im Rohr Schweißnähte und andere Unebenheiten befinden können, die ein Stoppen des Kolbens bewirken können. Eine Ausgestaltung der Erfindung sieht hierzu vor, daß der Kolben von einer oder mehreren flexiblen Manschetten gebildet ist, zwischen denen eine Abstützung angeordnet ist. Die flexiblen Manschetten können sich beim Überfahren von Unebenheiten vorübergehend verformen. Vorzugsweise sind mindestens zwei Manschetten vorgesehen, so daß beim Überfahren einer Unebenheit die zweite Manschette den Dichtungseingriff mit der Rohrwandung aufrechterhält. Zwischen den flexiblen Manschetten sind vorzugsweise aus Styropor bestehende Abschnitte angeordnet, welche die Manschetten zwar ausreichend abstützen, selbst jedoch ausreichend nachgiebig sind.

Damit der Kolben mit dem Kabelanfang nicht unkontrolliert aus dem anderen Ende herausschießt, ist nach einer weiteren Ausgestaltung der Erfindung am anderen Ende des Rohres eine rohrförmige Fangvorrichtung angeordnet, die mit den Lüftungsöffnungen versehen ist.

Wie bereits erwähnt, kann der im Rohr herrschende Luftdruck als Anzeige für die Zugkraft verwendet werden. Nach einer Ausgestaltung der Erfindung ist eine Druckreguliervorrichtung für die Druckluft vorgesehen, und in der Druckluftleitung ist ein Absperrventil angeordnet, das von der Zugkraftmeßvorrichtung geschlossen wird, wenn die Zugkraft einen vorbestimmten Wert überschreitet. Die Zugkraftmeßvorrichtung ist ein herkömmliches Druckmeßgerät. Die Druckreguliervorrichtung sorgt für das Aufbringen von Druckluft in gewünschter Druckhöhe.

Die Erfindung wird nachfolgend anhand von Zeichnungen näher erläutert.

Fig. 1 zeigt schematisch eine erfindungsgemäße Vorrichtung im Betrieb.

Fig. 2 zeigt einen Schnitt durch eine Anschlußvorrichtung.

Fig. 3 zeigt einen Schnitt durch eine Fangvorrichtung.

Fig. 4 zeigt schematisch einen Teil eines Steuerpults der Vorrichtung nach Fig. 1.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

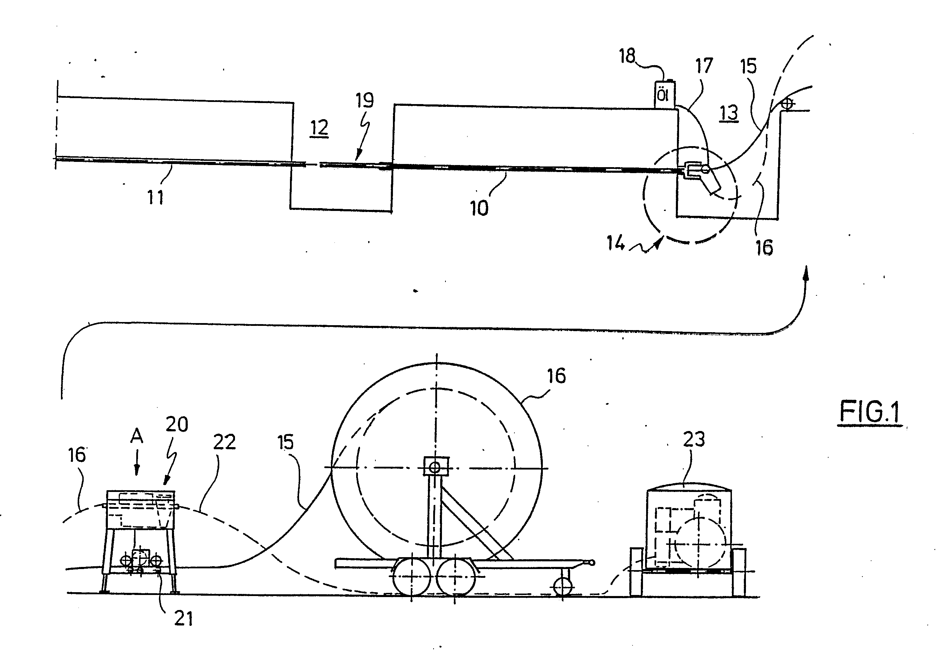

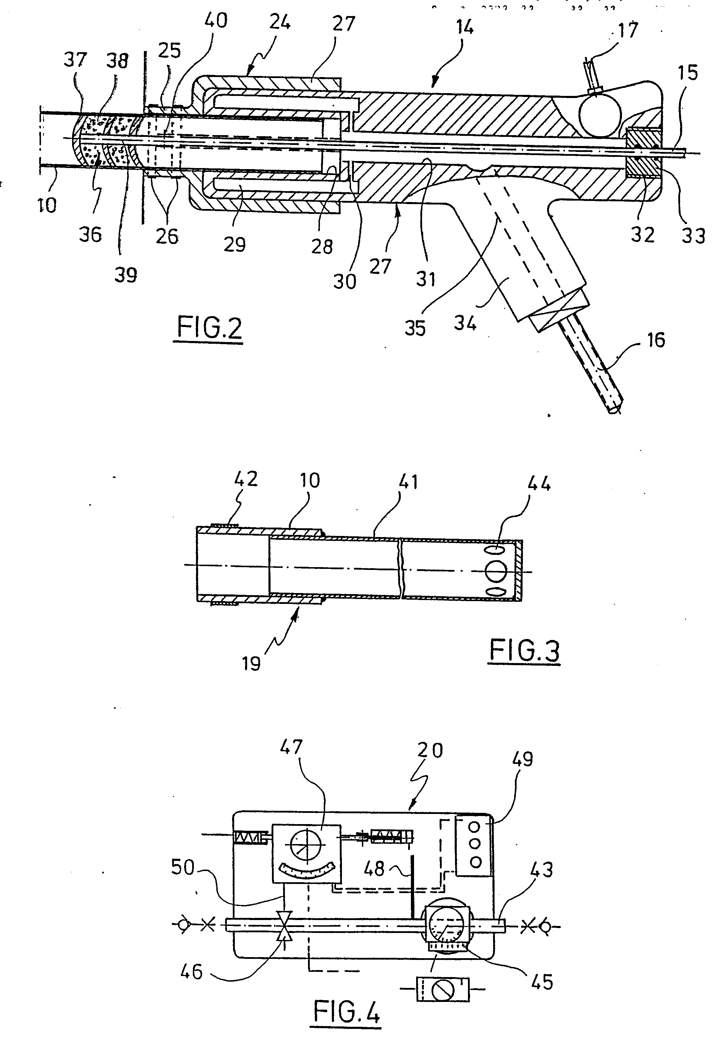

In Fig. 1 sind zwei Rohrabschnitte 10, 11 von einer Länge von zum Beispiel 2000 m im Erdreich verlegt. Zwischen den Abschnitten 10, 11 ist eine Grube 12 angeordnet, in die die Rohrenden hineinstehen. Das rechte Ende des Rohrs 10 steht in eine Grube 13 vor.In der Grube ist mit dem Rohr 10 eine allgemein mit 14 bezeichnete Einziehvorrichtung angeordnet, in die ein Glasfaserkabel 15 hineingeführt ist und mit der eine Druckluftleitung 16 verbunden ist. Einzelheiten der Vorrichtung 14 gehen aus Fig. 2 hervor. Über eine Leitung 17 ist ein Ölgefäß 18 mit der Vorrichtung 14 verbunden.

Am linken Ende des Rohrs 10 ist eine Fangvorrichtung 19 angeschlossen, von der Einzelheiten in Fig. 3 zu erkennen sind.

Das Kabel durchläuft in allgemein mit 20 bezeichnetes Steuerpult, das eine Vorrichtung 21 zur Längenmessung enthält. Mit dem Steuerpult 20 ist auch die Druckluftleitung 16 verbunden. Am gegenüberliegenden Ende ist eine Druckluftleitung 22 angeschlossen, die mit einem Kompressor 23 verbunden ist. Das Kabel 15 wird von einer Seiltrommel 16 gezogen.

Wie aus Fig. 2 zu erkennen ist, sitzt auf dem Ende des Rohres 10 ein hülsenförmiges Anschlußstück 24. Es hat zwei unterschiedliche Durchmesser. Mit dem engeren Abschnitt 25 liegt das Anschlußstück 24 am Umfang des Rohres 10 an und wird dort mit Hilfe von Schellen 26 fixiert. Der Abschnitt 27 mit größerem Durchmesser umgibt mit radialem Abstand das Rohr 10. Die Anschlußvorrichtung 14 besitzt ein pistolenartiges Gehäuse 27, das am vorderen Abschnitt einen Bohrungsabschnitt 28 aufweist. Mit dem Bohrungsabschnitt 28 wird das Gehäuse 27 auf das Rohr 10 geschoben und dichtend in den Ringraum zwischen Anschlußstück 24 und Rohr 10. Um den Bohrungsabschnitt 28 herum ist ein ringförmiger Hohlraum 29 vorgesehen, der bei 30 mit einem Bohrungsabschnitt 31 hinter dem Bohrungsabschnitt 28 in Verbindung ist. Der längere Bohrungsabschnitt 31 hat einen erheblich kleineren Durchmesser. In einem dritten Bohrungsabschnitt 32 sitzt am Ende des Bohrungsabschnitts 31 ein Dichtstopfen 33, der mit einer Durchbohrung als Durchführung für das Kabel 15 dient. Die Ölleitung 17 ist am hinteren Ende des Bohrungsabschnitts 31 angeschlossen. Mit dem - schräg nach hinten und unten verlaufenden Abschnitt 34 des Gehäuses 27 ist die Druckluftleitung 16 verbunden. Im Gehäuseabschnitt 34 ist ein Kanal 35 geformt, der mit dem Bohrungsabschnitt 31 verbunden ist.

Im Rohr 10 befindet sich ein Kolben 36. Der Kolben 36 besteht aus drei kugelabschnittsförmigen Manschetten 37, die in gleichem Abstand voneinander angeordnet sind. Zwischen den Manschetten 37, die aus einem elastisch nachgebendem Material bestehen, sind entsprechend geformte Abstandsstücke 38 aus Styropor angeordnet. Die Manschetten 37 sind mit einer Kolbenstange 39 verbunden, die ihrerseits mit einen Kabelziehstrumpf 40 verbunden ist. Das vordere Ende des Kabels 15 wird vom Kabelziehstrumpf 40 erfaßt.

Die in Fig. 3 gezeigte Fangvorrichtung weist ein relativ dünnes Rohr 41 auf, das passend in das Rohr 10 eingeschoben ist und durch die Schelle 42 befestigt werden kann. Am Ende weist das Rohr 41 über den Umfang verteilte Entlüftungsöffnungen 44 auf.

Fig. 4 zeigt eine Draufsicht auf das Steuerpult nach Fig. 1. Ein Rohrabschnitt 43 ist durch das Pult 20 hindurchgeführt und an einem Ende mit der Druckluftleitung 16 und am anderen Ende mit der Druckluftleitung 22 verbunden, wobei entsprechende Rückschlagventile vorgesehen sind. In der Leitung 43 ist eine Druckregelvorrichtung 45 angeordnet, mittels der der Druck abströmseitig der Druckregelvorrichtung 45 einstellbar bzw. regelbar ist. In der Leitung 43 ist ferner ein Absperrventil 46 angeordnet. Im Steuerpult 20 befindet sich ferner eine Druckmeßvorrichtung 47, die an eine vom Rohr 43 abgehende Abzweigleitung 48 zwischen der Druckregelvorrichtung 45 und dem Absperrventil 46 angeschlossen ist. Die Druckmeßvorrichtung 45 wandelt den Druck in der Leitung 43 in eine dazu proportionale Zugkraft am vorderen Ende des Kabels 15 um und zeigt diese auf einer entsprechenden Anzeige an. Die Druckmeßvorrichtung 47 wird von einem Akku 49 gespeist. Die Druckmeßvorrichtung 47 ist ferner über eine Steuerleitung 50 mit dem Absperrventil 46 verbunden.

Die in den Figuren dargestellte Vorrichtung arbeitet wie folgt.

Ein durch das Rohr 10 zu führendes Glasfaserkabel 15 wird zunächst über die Durchführung 43 in das Gehäuse 27 eingeführt. Das Gehäuse 27 befindet sich dabei außerhalb des Anschlußstücks 27. Anschließend wird der Kabelziehstrumpf 40 mit dem Kabelende zusammengebracht. Der Kolben 36 befindet sich bereits im Rohr 10. Im Anschluß daran wird das Gehäuse 27 in das Anschlußstück 24 eingeschoben. Nunmehr wird Druckluft in das Gehäuse 27 eingeleitet, etwa durch Öffnen des Absperrventils 46. Die Druckluft treibt den Kolben 36 durch die Rohrleitung 10 und nimmt dabei das Kabel 15 mit. Über die Leitung 17 wird vom Öler 18 ständig Öl zugeführt entsprechend der gewünschten Menge. Der Ringraum 29 im Gehäuse 27 wirkt als Puffer gegenüber abrupten Druckänderungen. Auf diese Weise wird der Kolben 36 bis zur Fangvorrichtung 19 vorgetrieben. Es ist möglich, die Entlüftungsöffnungen 44 so anzuordnen, daß sie vom Kolben 36 zumindest teilweise überfahren werden, so daß plötzlich ein Druckabfall entsteht, wodurch vermieden wird, daß der Kolben 36 zu fest gegen das geschlossene Ende des Rohrs 41 anschlägt. Darüber hinaus kann der Druckabfall von der Druckmeßvorrichtung 47 erfaßt werden und zur Betätigung des Absperrventils 46 dienen, um die weitere Zufuhr von Druckluft zu sperren.

Mit Hilfe der Druckregelvorrichtung 45 wird der Treibdruck im Rohr 10 eingestellt. Die Druckmeßvorrichtung 47 mißt den Druck. Die Zugkraft am Kabel ist proportional dem gemessenen Druck. Da diese einen bestimmten Wert nicht überschreiten darf, schließt die Druckmeßvorrichtung 47 über die Steuerleitung 57 das Absperrventil 46, wenn der Druck einen vorgegebenen Wert übersteigt.

## Ansprüche

1. Verfahren zum Einziehen von Kabel, insbesondere Glasfaserkabel in ein Rohr, bei dem auf den Anfang des Kabels eine Zugkraft aufgebracht wird, dadurch gekennzeichnet, daß der Kabelanfang mit einem mit dem Rohr (10) zusammenwirkenden Kolben (36) verbunden und mittels in das Rohr (10) eingeführter Druckluft durch das Rohr (10) getrieben wird.

2. Vorrichtung zur Durchführung des Verfahrens nach Anspruch 1, gekennzeichnet durch eine Anschlußvorrichtung (14), die mit einem Ende des Rohres (10) verbindbar ist und eine luftdichte Durchführung (33) für das Kabel (15) koaxial zum Rohr (10) sowie einen Druckluftanschluß (16, 34) aufweist, und durch einen in das Rohr (10) einführbaren, mit diesem dichtend zusammenwirkenden Kolben (36), der mit einem mit dem Kabel (15) verbindbaren Ziehgerät (40) versehen ist.

3. Vorrichtung nach Anspruch 2, dadurch gekennzeichnet, daß die Anschlußvorrichtung (14) pistolenartig (27) geformt ist und mit am vorderen zylindrischen Ende in ein hülsenartiges Anschlußstück (27) einschiebbar ist, das seinerseits fest mit dem Rohr (10) verbindbar ist.

4. Vorrichtung nach Anspruch 2 oder 3, dadurch gekennzeichnet, daß der Kolben (36) von einer oder mehreren flexiblen Manschetten (37) gebildet ist, zwischen denen eine Abstützung (38) angeordnet ist.

5. Vorrichtung nach Anspruch 4, dadurch gekennzeichnet, daß die Manschetten (37) kugelabschnittsförmig sind und zwischen axial beabstandeten Manschetten (37) entsprechend geformte Abstandsstücke (38) angeordnet sind.

6. Vorrichtung nach Anspruch 4 oder 5, dadurch gekennzeichnet, daß die Abstandsstücke (38) aus Styropor bestehen.

7. Vorrichtung nach einem der Ansprüche 2 bis 6, dadurch gekennzeichnet, daß nach der Durchführung (33) eine Ölvorrichtung (18) an die Anschlußvorrichtung (14) angeschlossen ist.

8. Vorrichtung nach einem der Ansprüche 2 bis 6, dadurch gekennzeichnet, daß auf dem anderen Ende des Rohres (10) eine rohrförmige Fangvorrichtung (19) angeordnet ist, die mit Entlüftungsöffnungen (44) versehen ist.

9. Vorrichtung nach einem der Ansprüche 2 bis 8, in der eine Steuervorrichtung vorgesehen ist, die eine Vorrichtung zur Messung der gezogenen Länge des Kabels und der an das Kabel angreifenden Zugkraft aufweist, dadurch gekennzeichnet, daß in der Steuervorrichtung eine Druckreguliervorrichtung (45) für die Druckluft angeordnet ist und in der Druckluftleitung (43) ein Absperrventil (46) angeordnet ist, das von der Zugkraftmeßvorrichtung (47) geschlossen wird, wenn die Zugkraft einen vorgegebenen Wert überschreitet.

10. Vorrichtung nach Anspruch 9, dadurch gekennzeichnet, daß die Zugkraftmeßvorrichtung (47) mit dem Druck der Druckluftleitung (43) beaufschlagt ist.

FIG.1

0 251 129

FIG.2

FIG.3

FIG.4